# EUROPEAN PATENT APPLICATION

(11) **EP 3 029 447 A2**
(43) Date of publication of application: **08.06.2016**
(21) Application number: 15172561.1
(22) Date of filing: 17.06.2015
(51) Int. Cl.: G01M 7/02, G01M 7/06

(54) **LOW-COST BIDIRECTIONAL SHAKING TABLE APPARATUS**

(30) Priority: 11.11.2014 KR 20140155988
(71) Applicant: Soonchunhyang University Industry Academy Cooperation Foundation, Asan-si, Chungcheongnam-do 336-745 (KR)
(72) Inventor: KIM, Yeesock, Shewbury, MA 01545 (US); NAM, Yun-Young, Chungcheongnam-do 336-750 (KR); ARSAVA, Kemal Sarp, Lowell, MA 01854 (US); NOH, YeonSik, Seoul (KR); PARK, Byung-Wook, Stow, Ohio 44224 (US); HTET, Yar Zar Moe, Worcester, MA 01609 (US); AUNG, Moe Hein, Worcester, MA 01609 (US); ELKORCHI, Tahar, Newton, MA 02468 (US)
(74) Representative: Appleyard Lees IP LLP

(57) **Abstract**

Disclosed herein is a low-cost bidirectional shaking table apparatus capable of performing earthquake-resistant tests to be incorporated into earthquake-resistant designs. The low-cost bidirectional shaking table apparatus may include test members 10 each configured to have a specific width and height, a table member 20 configured to have the test member 10 detachably fixed to the test member, a first shaking member 30 configured to shake the table member 20 in a first direction, a second shaking member 40 configured to shake the table member 20 in a second direction along with the first shaking member 30, shaking detection members 50 provided in the respective test members 10 and each configured to detect shaking of the test member 10, and a shaking control unit 60 configured to selectively drive the first shaking member 30 and the second shaking member 40 and recognize and manage a detection state of the shaking detection members 50.

## Description

### CROSS REFERENCE TO RELATED APPLICATION

The present application claims the benefit of Korean Patent Application No. 10-2014-0155988 filed in the Korean Intellectual Property Office on November 11, 2014, the entire contents of which are incorporated herein by reference.

### BACKGROUND OF THE INVENTION

### 1. Technical Field

Embodiments of the present invention relate to a low-cost bidirectional shaking table apparatus capable of performing earthquake-resistant tests to be incorporated into earthquake-resistant designs.

### 2. Description of the Related Art

In general, the shapes of infrastructure, such as buildings and bridges, and high-rise buildings in engineering works are greatly changed. Methods performed in side loads, such as an earthquake and a strong wind, affect different attributes, such as the size, building, basic type, and land characteristics.

In particular, great deformation and structure may be seriously damaged by an inertia force attributable to an earthquake.

Furthermore, an earthquake-resistant building has been designed to resist a specific earthquake force, such as bending and shaking, but it is difficult to predict a dynamic behavior of a structure under another earthquake load. Great care is needed to be taken in order to provide reliable data to different scenarios and to maintain a safety structure. Accordingly, it is necessary to avoid a severe failure and to secure people' safety and an overall structure.

Accordingly, engineers who understand the concept of the earthquake-resistant design are required to develop a shaking table capable of performing earthquake-resistant tests to be incorporated into earthquake-resistant designs.

The background of the present invention is disclosed in Korean Patent No. 10-0312014 (October 04, 2001).

### SUMMARY OF THE INVENTION

An object of the present invention is to provide a low-cost bidirectional shaking table apparatus capable of performing earthquake-resistant tests to be incorporated into earthquake-resistant designs.

A low-cost bidirectional shaking table apparatus in accordance with an embodiment of the present invention may include test members 10 each configured to have a specific width and height, a table member 20 configured to have the test member 10 detachably fixed to the test member, a first shaking member 30 configured to shake the table member 20 in a first direction, a second shaking member 40 configured to shake the table member 20 in a second direction along with the first shaking member 30, shaking detection members 50 provided in the respective test members 10 and each configured to detect shaking of the test member 10, and a shaking control unit 60 configured to selectively drive the first shaking member 30 and the second shaking member 40 and recognize and manage a detection state of the shaking detection members 50.

### BRIEF DESCRIPTION OF THE DRAWINGS

FIG. 1 is a block diagram of a low-cost bidirectional shaking table apparatus in accordance with an embodiment of the present invention;
FIG. 2 is a perspective view in accordance with an embodiment of the present invention;
FIG. 3 is an exploded perspective view of a test member that may be applied to an embodiment of the present invention;
FIG. 4 is an exploded perspective view of a first shaking member that may be applied to an embodiment of the present invention;
FIG. 5 is an exploded perspective view of a first shaking member that may be applied to another embodiment of the present invention;
FIG. 6 is a side view in accordance with an embodiment of the present invention; and
FIG. 7 is a block diagram of a low-cost bidirectional shaking table apparatus in accordance with another embodiment of the present invention.

### DETAILED DESCRIPTION

Hereinafter, some embodiments of the present invention are described in detail with reference to the accompanying drawings.

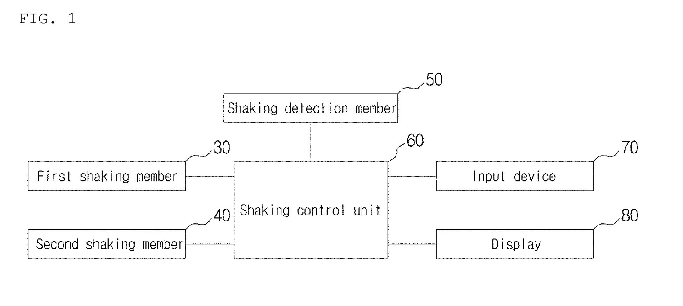

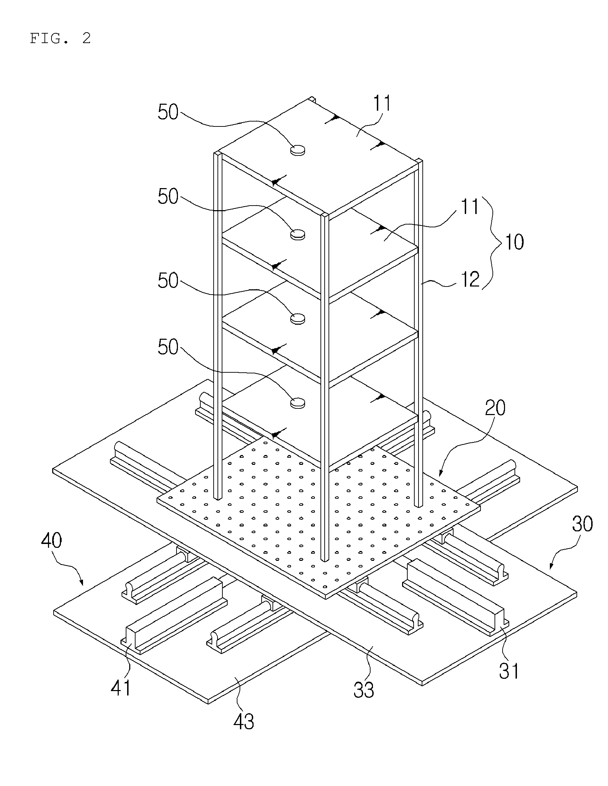

As illustrated in FIG. 1 and FIG. 2, the low-cost bidirectional shaking table apparatus in accordance with an embodiment of the present invention may include a test member 10, a table member 20, a first shaking member 30, a second shaking member 40, shaking detection members 50, and a shaking control unit 60.

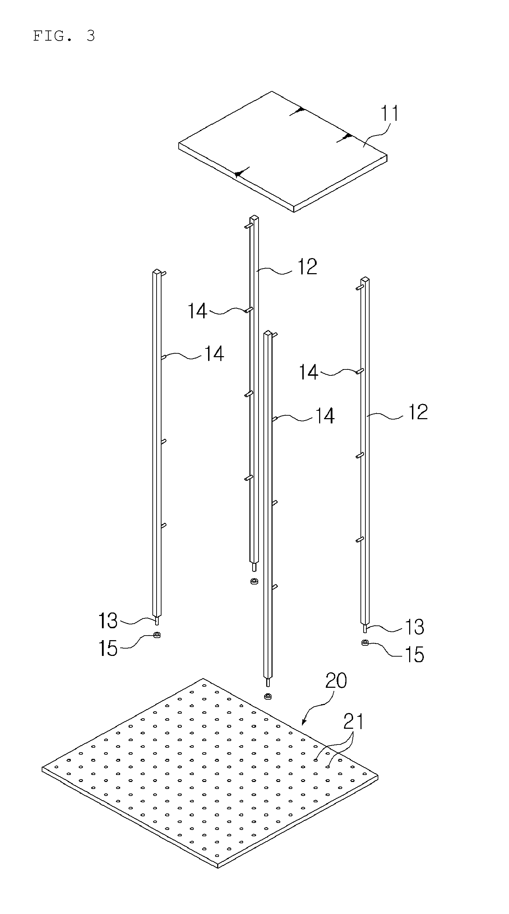

As illustrated in FIG. 3, the test member 10 has a specific width and height and may include test plates 11 having a specific width and a plurality of shafts 12 to which the outsides of the test plates 11 spaced apart from each other up and down are fixed.

Each of the test plates 11 may be a flat plate having an approximately rectangular shape so that the shaking detection member 50 is fixed to the test plate 11 or a test object is seated in the test plate 11.

Each of the shafts 12 may include an insertion pin 13 that is protruded downward and inserted into the table member 20. That is, when the insertion pins 13 are inserted into the respective insertion holes 21 of the table member 20, the shafts 12 can be fixed to the table member 20 in the upright state. In this case, the insertion pins 13 may be formed of screw shafts. Accordingly, the insertion pins 13 may be screwed onto the table member 20, or they may penetrate the table member 20 and may be then coupled by coupling member 15. In this case, the coupling members 15 may be nuts.

Furthermore, fixing pins 14 to which the test plates 11 are fixed may be protruded from the shafts 12. That is, the sides of the test plate 11 may be straddled on the fixing pins 14 that are protruded from the shafts 12 in such a way as to face each other.

Furthermore, the test plates 11 can be fixed to respective floors and the shaking detection members 50 can be disposed in the respective test plates 11 because the fixing pins 14 are spaced apart from each other up and down and protruded from the shafts 12. Accordingly, the shaking detection member 50 disposed in the test plate 11 at a relatively high location and the shaking detection member 50 disposed in the test plate 11 at a relatively low location can different amounts of shaking.

Furthermore, the test plate 11 may be detachably fixed to the fixing pins 14 of the shafts 12, and the shaft 12 may be detachably inserted into the table member 20.

In some embodiments, the test plate 11 and the shafts 12 may be integrated by bolting or welding in order to prevent the test plate 11 from being separated from the shafts 12.

The table member 20 may be formed of a sheet member in which the plurality of insertion holes 21 spaced apart from one another at specific intervals in all directions are formed so that the shafts 12 are detachably inserted therein. The insertion holes 21 may be formed of screw taps so that the screw shafts, that is, the insertion pins 13 of the shafts 12, are screwed onto the insertion holes 21. Accordingly, the coupling state of the shafts 12 can be firmly maintained, and the shafts 12 can be easily separated and coupled.

In particular, the shafts 12 can be disposed at narrow or wide intervals because they are able to be selectively inserted into the insertion holes 21. Accordingly, the test member 10 having a wide width or a narrow width can be completed because the wide or narrow test plates 11 can be disposed in the shafts 12.

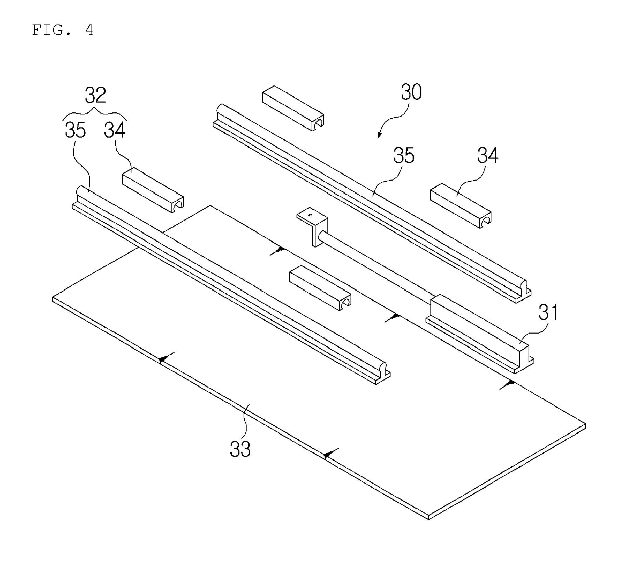

As illustrated in FIG. 4, the first shaking member 30 functions to shake the table member 20 in one direction and may include a first driving unit 31 configured to reciprocate the table member 20 in one direction, first guidance units 32 configured to guide the table member 20 reciprocated in one direction by the driving of the first driving unit 31, and a movable plate 33 configured to have the first driving unit 31 and the first guidance units 32 fixed thereto.

The first driving unit 31 may include an actuator configured to expand and contract an actuator shaft having one end connected to the table member 20.

Each of the first guidance units 32 may include first guide blocks 34 fixed to the table member 20 and a first guide rail 35 fixed to the movable plate 33 and configured to guide a movement of the first guide blocks 34.

The movable plate 33 is made of a sheet member to which the first driving unit 31 and the first guidance units 32 are fixed by bolting.

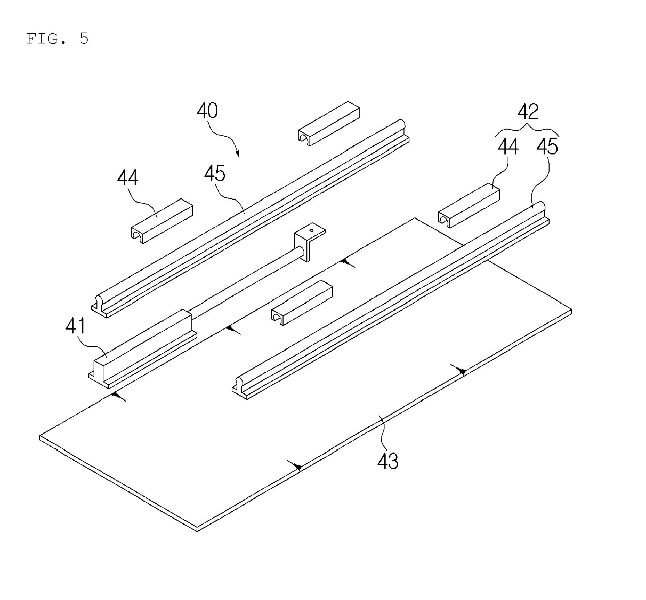

As illustrated in FIG. 5, the second shaking member 40 functions to shake the table member 20 in the other direction along with the first shaking member 30. The second shaking member 40 may include a second driving unit 41 configured to reciprocate the movable plate 33 of the first shaking member 30 in the other direction, second guidance units 42 configured to guide the movable plate 33 of the first shaking member 30 reciprocated in the other direction by the driving of the second driving unit 41, and a base plate 43 configured to have the second driving unit 41 and the second guidance units 42 fixed thereto.

The second driving unit 41 may include an actuator configured to expand and contract an actuator having one end fixed to the base plate 43.

Each of the second guidance units 42 may include second guide blocks 44 fixed to the movable plate 33 and a second guide rail 45 fixed to the base plate 43 and configured to guide a movement of the second guide blocks 44.

The base plate 43 may be formed of a sheet member to which the second driving unit 41 and the second guidance units 42 are fixed by bolting. In this case, the sheet member may be placed on the ground.

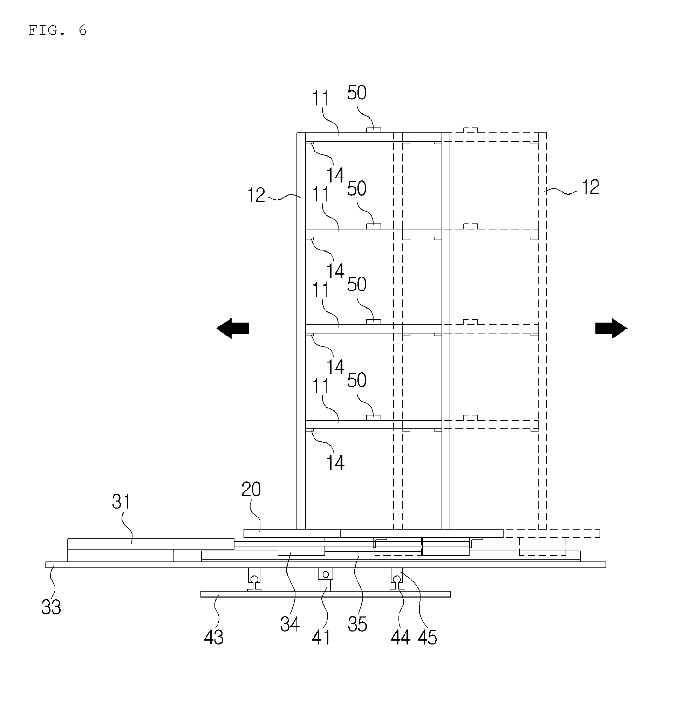

As illustrated in FIG. 6, when the first driving unit 31 of the first shaking member 30 is driven, the test member 10, together with the table member 20, horizontally reciprocate, so the shaking detection members 50 can detect shaking.

Furthermore, the first shaking member 30 and the second shaking member 40 are configured to reciprocate and shake the table member 20 in all directions and may be configured in a way different from that described above. For example, the first shaking member 30 and the second shaking member 40 may be configured to include a belt, a pulley, and a step motor or may be configured to include a pinion, a rack gear, and a step motor.

As illustrated in FIGS. 1 and 2, the shaking detection member 50 may be formed of a vibration sensor disposed in the test member 10 and configured to detect the shaking of the test member 10. That is, the vibration sensor detects the vibration of the shaking test member 10 and sends the detected detection value to the shaking control unit 60. A plurality of the shaking detection members 50 may be disposed in the respective test plates 11 of the test member 10 in order to detect respective vibrations.

The shaking control unit 60 selectively drives the first shaking member 30 and the second shaking member 40 and recognizes and manages a detection state of the shaking detection members 50. The shaking control unit 60 may be formed of a programmable IC chip or a controller or PC including a circuit board on which electronic parts have been mounted.

Furthermore, the shaking control unit 60 may be connected to an input device 70 including a keyboard or a mouse through which a user may input commands and to a display 80 for outputting a detection state of the shaking detection members 50 through a screen.

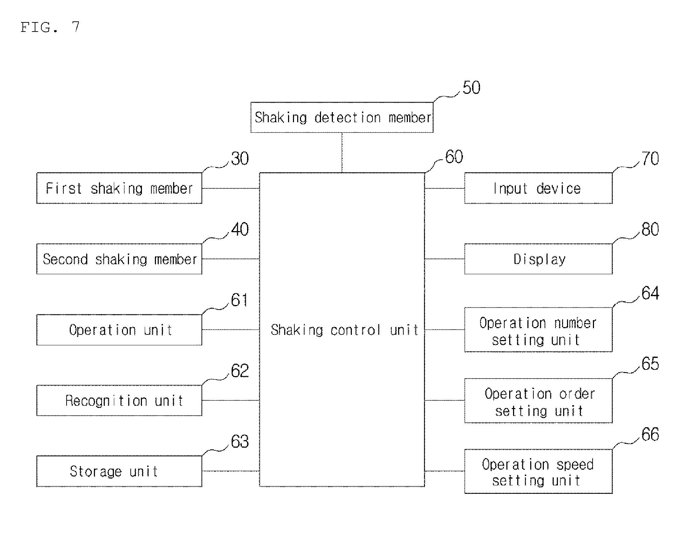

In accordance with another embodiment of the present invention, as illustrated in FIG. 7, a shaking control unit 60 may be configured to include an operation unit 61 configured to drive the first shaking member 30 in the state in which the second shaking member 40 has been stopped and to drive the second shaking member 40 in the state in which the first shaking member 30 has been stopped, a recognition unit 62 configured to recognize a detection state of the shaking detection members 50, and a storage unit 63 configured to stored the detection state recognized by the recognition unit 62.

In this case, the operation unit 61 drives the first shaking member 30 and the second shaking member 40 in response to a command received through a keyboard or a mouse.

Accordingly, when the operation unit 61 selectively drives the first shaking member 30 and the second shaking member 40, the detection value of the shaking detection member 50 that has detected the shaking of the moving test member 10 is recognized by the recognition unit 62 and stored in the storage unit 63.

Furthermore, the shaking control unit 60 may be connected to the display 80 for outputting the detection value recognized by the recognition unit 62 through a screen.

As described above, when the shaking control unit 60 drives the first shaking member 30 and the second shaking member 40, the test member 10 is shaken. At this time, the shaking detection member 50 detects a degree that the test member 10 has been shaken and sends the detection value to the shaking control unit 60. In response thereto, the shaking control unit 60 outputs the detection value through the display 80. Accordingly, a user can check the degree that the test member 10 is shaken by checking the detection value output through the display 80 with the naked eye.

Furthermore, the shaking control unit 60 may further include an operation number setting unit 64 configured to set the operation number of each of the first shaking member 30 and the second shaking member 40 so that the operation unit 61 drives the first shaking member 30 and the second shaking member 40 by a set number and an operation order setting unit 65 configured to set order of the first shaking member 30 and the second shaking member 40 that are to be driven.

Accordingly, when a user sets the operation number of each of the first shaking member 30 and the second shaking member 40 through the operation number setting unit 64 and sets the operation order through the operation order setting unit 65, the operation unit 61 may drive the first shaking member 30 and the second shaking member 40 in the set order by the set number.

For example, a user may set the first shaking member 30 so that it is driven five times and set the second shaking member 40 so that it is driven five times through the operation number setting unit 64. Furthermore, the user may set the first shaking member 30 so that it is driven in the first place, set the second shaking member 40 so that it is driven in the second place, set the first shaking member 30 so that it is driven in the third and fourth places, set the second shaking member 40 so that it is driven in the fifth to seventh places, set the first shaking member 30 so that it is driven in the eighth and ninth places, and set the second shaking member 40 so that it is driven in the tenth place through the operation order setting unit 65. Accordingly, after the first shaking member 30 is driven once and the second shaking member 40 is driven once, the first shaking member 30 is consecutively driven twice, and the second shaking member 40 is consecutively driven thrice. Thereafter, the first shaking member 30 is consecutively driven twice, and the second shaking member 40 is driven once. That is, when the first shaking member 30 and the second shaking member 40 are driven in set order, the test member 10 may be shaken in the set order by a predetermined number.

Furthermore, the shaking control unit 60 may further include an operation speed setting unit 66 configured to set operation speed of each of the first shaking member 30 and the second shaking member 40 so that the operation unit 61 drives the first shaking member 30 and the second shaking member 40 at set speed.

Accordingly, a user may differently set operation speed of each of the first shaking member 30 and the second shaking member 40 through the operation speed setting unit 66. For example, the first shaking member 30 may be set to operate at specific speed, and the second shaking member 40 may be set to operate at speed faster or slower than operation speed of the first shaking member 30. That is, the test member 10 may be shaken at various types of predetermined speed.

As described above, according to the present invention, the low-cost bidirectional shaking table apparatus may be said to be a very useful invention that can be widely applied because a degree that the test member 10 is shaken can be tested while moving the test member 10 in all directions.

Furthermore, the low-cost bidirectional shaking table apparatus is advantageous in that a building that may cope with an earthquake can be designed because it can perform earthquake-resistant tests to be incorporated into an earthquake-resistant design.

Furthermore, the low-cost bidirectional shaking table apparatus is advantageous in that it can perform earthquake-resistant tests corresponding to an actual earthquake because the test member can be shaken in all directions.

Those skilled in the art to which the present invention pertains will understand that the present invention may be implemented in other detailed forms without changing the technical spirit or indispensable characteristics of the present invention. Accordingly, it will be understood that the aforementioned embodiments are illustrative and not limitative from all aspects and the scope of the present invention is defined by the appended claims rather than the detailed description. The present invention should be construed as covering all modifications or variations derived from the meaning and scope of the appended claims and their equivalents.

## Claims

1. A low-cost bidirectional shaking table apparatus, comprising:
test members (10) each configured to have a specific width and height;
a table member (20) configured to have the test member 10 detachably fixed to the test member;
a first shaking member (30) configured to shake the table member (20) in a first direction;
a second shaking member (40) configured to shake the table member (20) in a second direction along with the first shaking member (30);
shaking detection members (50) provided in the respective test members (10) and each configured to detect shaking of the test member (10); and
a shaking control unit (60) configured to selectively drive the first shaking member (30) and the second shaking member (40) and recognize and manage a detection state of the shaking detection members (50).

2. The low-cost bidirectional shaking table apparatus of claim 1, wherein each of the test members (10) comprises:
a test plate (11) having the specific width, and
a plurality of shafts (12) to which outsides of the test plates (11) spaced apart from each other up and down are fixed.

3. The low-cost bidirectional shaking table apparatus of claim 2, wherein the shafts (12) comprise respective insertion pins (13) protruded downward and inserted into the table member (20).

4. The low-cost bidirectional shaking table apparatus of claim 1, wherein the table member (20) comprises a sheet member in which a plurality of insertion holes (21) spaced apart from one another at specific intervals in all directions is formed so that the test member (10) is inserted into the insertion holes (21).

5. The low-cost bidirectional shaking table apparatus of claim 1, wherein the insertion holes (21) comprises screw taps.

6. The low-cost bidirectional shaking table apparatus of claim 1, wherein the first shaking member (30) comprises:
a first driving unit (31) configured to reciprocate the table member (20) in the first direction,
first guidance units (32) configured to guide the table member (20) reciprocated in the first direction by the driving of the first driving unit (31), and
a movable plate (33) configured to have the first driving unit (31) and the first guidance units (32) fix to the movable plate.

7. The low-cost bidirectional shaking table apparatus of claim 1, wherein the second shaking member (40) comprises:
a second driving unit (41) configured to reciprocate the movable plate (33) of the first shaking member (30) in the second direction,
second guidance units (42) configured to guide the movable plate (33) of the first shaking member (30) reciprocated in the second direction by the driving of the second driving unit (41), and
a base plate (43) configured to have the second driving unit (41) and the second guidance units (42) fixed to the base plate.

8. The low-cost bidirectional shaking table apparatus of claim 1, wherein the shaking detection member (50) comprises a vibration sensor.

9. The low-cost bidirectional shaking table apparatus of claim 1, wherein the shaking control unit (60) comprises:
an operation unit (61) configured to drive the first shaking member (30) in a state in which the second shaking member (40) has been stopped and to drive the second shaking member (40) in a state in which the first shaking member (30) has been stopped,
a recognition unit (62) configured to recognize a detection state of the shaking detection members (50), and
a storage unit (63) configured to store the detection state recognized by the recognition unit (62).

10. The low-cost bidirectional shaking table apparatus of claim 9, wherein the shaking control unit (60) comprises:
an operation number setting unit (64) configured to set an operation number of each of the first shaking member (30) and the second shaking member (40) so that the operation unit (61) drives the first shaking member (30) and the second shaking member (40) by a set number, and
an operation order setting unit (65) configured to set order of the first shaking member (30) and the second shaking member (40) that are to be driven.

11. The low-cost bidirectional shaking table apparatus of claim 9, wherein the shaking control unit (60) further comprises an operation speed setting unit (66) configured to set operation speed of each of the first shaking member (30) and the second shaking member (40) so that the operation unit (61) drives the first shaking member (30) and the second shaking member (40) at set speed.
